Europäisches Patentamt

European Patent Office

Office européen des brevets

(19)

(11) Publication number: 0 153 706
B1

# EUROPEAN PATENT SPECIFICATION

(12)

(45) Date of publication of patent specification: **27.12.89**

(51) Int. Cl.⁴: **B 29 C 67/22**

(21) Application number: **85101914.1**

(22) Date of filing: **21.02.85**

(54) Production method of expansion-molded article of thermoplastic resin and apparatus therefor.

(30) Priority: **22.02.84 JP 32151/84**
**28.09.84 JP 203734/84**

(43) Date of publication of application:
**04.09.85 Bulletin 85/36**

(45) Publication of the grant of the patent:
**27.12.89 Bulletin 89/52**

(84) Designated Contracting States:
**DE FR GB**

(56) References cited:
**EP-A-0 072 499**
**EP-A-0 081 797**
**FR-A-2 406 518**
**GB-A-1 115 366**
**US-A-4 060 354**

(73) Proprietor: **Japan Styrene Paper Corporation**
**1-1, 2-chome, Uchisaiwai-cho**
**Chiyoda-ku Tokyo (JP)**

(72) Inventor: **Kuwabara, Hideki**
**Hadano Masion B-609, 2044 Minamiyana**
**Hadano-shi Kanagawa-ken (JP)**
Inventor: **Kitagawa, Atusi**
**2-1-436, Tsujidounishikaigan**
**Fujisawa-shi Kanagawa-ken (JP)**
Inventor: **Kanbe, Masato**
**301-2, Nagamochi**
**Hiratsuka-shi Kanagawa-ken (JP)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## Description

The invention relates to a method for producing an expansion-molded article of a thermoplastic resin, which comprises: transferring a suitable portion of pre-foamed particles of the thermoplastic resin to an pressurizing hopper and holding the thus-transferred pre-foamed particles under pressure in the pressurizing hopper; filling under pressure a predetermined amount of the pre-foamed particles from the pressurizing hopper into a mold; and heating the thus-filled pre-foamed particles within the mold so as to cause the pre-foamed particles to foam and expand, thereby fusion-bonding the resulting expanded particles to obtain the expansion-molded article of the thermoplastic resin.

Furthermore, the invention relates to an apparatus suitable for use in the production of an expansion-molded article of a thermoplastic resin, which comprises: at least one pressurizing hopper including a particle inlet and a particle outlet and adapted to hold a suitable portion of the particles, which suitable portion has been transferred thereto, and then to feed an amount of the particles which amount is desired for molding the expansion-molded article; a gate mechanism for openably closing the particle outlet of the pressurizing hopper; at least one molding machine equipped with a molding compartment, in which the particles are to be filled, and heating means for heating the thus-filled particles to cause the thus-filled particles to expand; and a particle filling system for causing the particles to flow out from the pressurizing hopper through the particle outlet thereof and then for filling the particles into the molding compartment through a particle filling opening, while maintaining the particles in the pressurized state.

For the production of an expansion-molded article through expansion-molding of pre-foamed particles of a thermoplastic resin in a mold, it has conventionally been employed to feed a suitable portion (for example, an amount required for several molding operations) of pre-foamed particles which have in advance been subjected to a pressure treatment in a pressurizing tank and applied with an internal pressure, to a hopper; to take out a portion of the thus-fed pre-foamed particles, which portion is required for a single molding operation, from the hopper and to fill them in a mold; and then to carry out their molding. In conventional production methods and apparatus, pre-foamed particles are however kept exposed to atmospheric pressure in each hopper. Accordingly, the internal pressure of the pre-foamed particles decreases along with the time of their exposure to atmospheric pressure in the hopper. This leads to a drawback that the resulting expansion-molded articles develop large dimensional variations. The drop of internal pressure becomes more remarkable in the case of pre-foaming particles having diameters below 10 mm. Such a significant drop of internal pressure results in an insufficient forming expansion force, whereby developing such drawbacks that the melt-bonding of particles is poor, severe ruggedness is developed on the surfaces of each molded article, or each article is molded with a large shrinkage factor.

Furthermore, due to the structure of the hopper which is open to the atmosphere, there is another drawback that when a predetermined amount of pre-foamed particles is fed from the hopper to the mold upon conducting their molding operation, it is difficult to transfer the particles smoothly and promptly from the hopper to the mold.

Furthermore, a method and an apparatus of the type mentioned in the beginning are described in GB—A—1 115 366. If the hopper is to be filled with pre-foamed particles it is necessary to open the closure of the hopper and to expose the inside of the hopper and thereby the pre-foamed particles on the hopper to atmospheric pressure as well as to expose also to atmospheric pressure the pre-foamed particles being charged into the hopper. Accordingly, as stated above in connection with the other prior art discussed herein, the internal pressure of the pre-foamed particles decreases leading to the above indicated drawbacks.

The present invention has been completed with a view toward solving the above-mentioned drawbacks.

An object of this invention is therefore to provide a production method of an expansion-molded article of a thermoplastic resin, in which the pre-foamed particles, which have been applied with an internal pressure, are always kept under pressure from the application of the internal pressure thereto to their molding so as to avoid drop of internal pressure of the particles.

Another object of this invention is to provide a production method of an expansion-molded article of a thermoplastic resin, in which upon filling pre-foamed particles in a mold while holding them under pressure, the filling of the particles is effected while minimizing the compression of the particles so that their expansion efficiency can be increased.

A further object of this invention is to provide an apparatus suitable for use in the production of an expansion-molded article of a thermoplastic resin, in which pre-foamed particles, to which an internal pressure has in advance been applied, are filled in a mold and then subjected to expansion molding while holding the pre-foamed particles under pressure.

In one aspect of this invention, there is accordingly provided a method of the type mentioned in the beginning which is characterized in that the pre-foamed particles have been kept always under pressure in a pressurizing tank.

In another aspect of this invention there is provided a method of the type mentioned in the beginning which is characterized in that said pre-foamed particles have been kept always under pressure in a pressurizing tank and that said pre-foamed particles are filled into the mold without substantial volume reduction of the thus-filled particles while maintaining a cracking in the mold.

In still another aspect of this invention, there is also provided an apparatus of the type mentioned in the beginning, which is characterized by a pressurizing tank having an internal volume sufficient to keep pre-foamed particles of the thermoplastic resin therein and including a particle outlet; a pressure feed system for pressurizing the interior of the pressurizing tank so as to apply a predetermined internal pressure to the particles; and particle transfer means for causing, while maintaining the suitable portion of the particles in the pressurized state, the suitable portion of the particles to flow out from the pressurizing tank through the particle outlet and then to enter the pressurizing hopper through the particle inlet thereof.

According to this invention, the pre-foamed particles which have in advance been pressurized in the pressurizing tank are transferred by the particle transfer means to the pressurizing hopper while maintaining them in their pressurized state. In the pressurizing hopper, they are also held under pressure. Thereafter, the particles are filled from the pressurizing hopper into the molding compartment of the molding machine by a particle filling system while maintaining them in their pressurized state. Therefore, the particles which have flown out of the pressurizing tank are always kept under pressure until they are filled in the molding compartment.

In the present invention, the particles are thus not exposed to atmospheric pressure during the entire molding cycle upon producing an expansion-molded article from the pre-foamed particles. This allows to avoid drop of internal pressure of the particles after their pressure treatment and until their molding. As a result, even then particles fed out from the pressurizing tank are molded in several portions, no dimensional variations will be developed among the resulting products despite of passage of time of the molding cycle, thereby bringing about an advantageous effect that uniform products can be obtained. Since it is also possible to avoid drop of internal pressure of particles as mentioned above, the present invention has brought about another advantageous effect that particles can be readily and completely melt-bonded and high-quality molded articles having smooth surfaces can be obtained.

The apparatus of this invention has particle transfer means capable of transferrring particles while maintaining them in their pressurized state and a particle filling system capable of filling the particles in a mold while maintaining them in their pressurized state. Accordingly, the transfer of the particles can be carried out smoothly and promptly after taking them out of the pressurizing tank and until introducing them into the mold. This enables to shorten the time of molding cycle and hence to increase the production efficiency significantly.

Furthermore, the apparatus of this invention is equipped with the pressurizing hopper. The provision of the pressurizing hopper allows to take out an amount of particles, which amount is required for a molding operation, from the pressurizing tank before their actual molding, thereby bringing about a further advantageous effect that the molding work can be conducted efficiently.

In a preferred embodiment of this invention, particles may be filled under pressure in the mold while leaving a cracking in the mold. In this case, the particles are not compressed when filled in the mold. This means that the particles can be filled in the mold without substantially reducing the volumes of the particles. As a result, it is possible to produce a molded article having a higher extend of foaming than those available by a molding method of the compression filling type. Accordingly, a production method featuring excellent foaming efficiency can be provided as a further advantageous effect of this invention.·

The above and other objects, features and advantages of the present invention will become apparent from the following description and the appended claims, taken in conjunction with the accompanying drawings, in which:

Figure 1 is a simplified schematic vertical cross-sectional view of an apparatus according to one embodiment of this invention;

Figures 2—7 are simplifed schematic vertical cross-sectional views illustrating various steps for producing an expansion-molded article by means of the apparatus shown in Figure 1;

Figure 8 is a perspective view of a perforated pipe;

Figure 9 is a simplified schematic vertical cross-sectional view of an apparatus according to another embodiment of this invention;

Figures 10—13 are simplified schematic vertical cross-sectional views illustrating various steps for producing an expansion-molded article by means of the apparatus shown in Figure 9;

Figure 14 is a flow diagram showing production of expansion-molded articles by means of a plurality of molding machines connected to a single pressurizing hopper; and

Figure 15 is a flow diagram illustrating production of expansion-molded articles by means of a plurality of molding machines connected respectively to their corresponding pressurizing hoppers.

As pre-foamed particles of thermoplastic resins which are useful in the practice of this invention, may be mentioned pre-foamed particles made of such base resins as styrene-based resins, olefin resins, amide-base resins, urethane-base resins, ester-base resins and the like. Particularly great practical advantages may be obtained with pre-foamed particles having a large gas permeability and making use as a base resin of an olefin resin such as polypropylene, low density polyethylene, high density polyethylene, straight-chain low density polyethylene, an ethylenepropylene random copolymer, an ethylene-propylene block copolymer, an ethylene-vinyl acetate copolymer or the like.

Pre-foamed particles may be prepared by any suitable method known *per se* in the art. Where an olefin resin such as polyethylene, polypropylene, an ethylene-propylene copolymer or the like is used as a base resin for such pre-foamed particles, it is particularly advantageous to heat and soften particles of such an olefin resin and then to impregnate the thus-softened particles with a volatile foaming agent such as butane, propane, dichloro-difluoromethane or the like and/or an inorganic foaming agent such as carbon dioxide or the like in a closed vessel, and thereafter to release the thus-impregnated particles into a pressure lower than the internal pressure of the vessel.

Upon molding, an internal pressure is applied to pre-foamed particles. This applicaton of internal pressure may be effected by subjecting the pre-foamed particles to a pressure treatment by means of an inorganic gas such as air or carbon dioxide or a mixed gas of an inorganic gas and the above-described volatile foaming agent. It is however usual to effect the pressure treatment with air so that internal pressures are built up in the pre-foamed particles. The pressure treatment, which is intended to apply an internal pressure to pre-foamed particles, may be carried out in the pressurizing tank of the apparatus according to this invention. Alternatively, it may also be effected as a separate step.

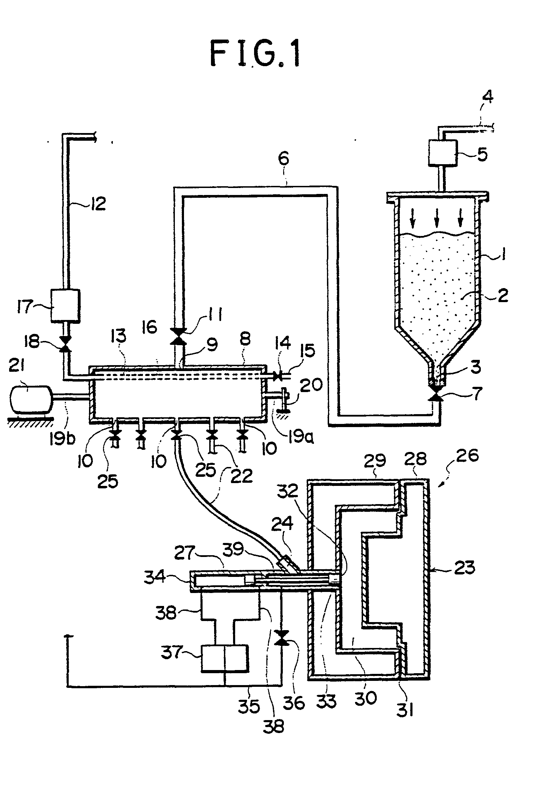

Referring first to Figure 1 to Figure 7, description will be made on a production apparatus according to one embodiment of this invention and various steps for producing an expansion-molded article by means of the production apparatus.

In Figure 1, numeral 1 indicates a pressurizing tank having an internal volume sufficient to keep pre-foamed particles 2 of a thermoplastic resin therein and including a particle outlet 3. A pressurizing gas is fed to the pressurizing tank 1. As the pressurizing gas, an inorganic gas such as air or carbon dioxide, a mixed gas of an inorganic gas and a volatile foaming agent such as butane, propane or dichlorodifluoromethane or the like may be used. In the present embodiment, description will be made using air as the pressurizing gas.

Into the pressurizing tank 1, air is introduced by means of a pressure feed system which is composed of an unillustrated air tank and a compression air feed line 4 connected to the air tank whereby to pressurize the interior of the tank 1. Owing to this pressurizing with air, a pre-determined internal pressure is applied to the particles 2 in the pressurizing tank 1.

Designated at numeral 5 is a pressurization regulator coupled to the compressed air feed line 4. It serves to control the pressure of the compressed air, which is to be fed to the pressurizing tank through the feed line 4, to a prescribed level. If desired or necessary, the regulator 5 may be provided with a function by which the pressure-raising velocity in the pressurizing tank 1 is controlled.

A particle feed line 6 is connected to the particle outlet 3 of the pressurizing tank 1. Numeral 7 indicates a gate valve for the particle outlet 3.

Numeral 8 is a pressurizing hopper which is disposed for example with its longitudinal axis extending horizontally. Similar to the pressurizing tank 1, the pressurizing tank 8 is constructed as a closed vessel and is equipped with a particle inlet 9 in the upper wall thereof and particle outlets 10 in the lower wall thereof. The number of the particle outlets 10 is determined suitably depending on the number of filling devices of a molding machine which will be described herein. Thus, one or more particle outlets may be provided.

A particle feed line 6 is connected to the particle inlet 9 so that a suitable portion of the pre-foamed particles 2 can be fed from the pressurizing tank 1 to the pressurizing hopper 8 while maintaining them under pressure. Numeral 11 indicates a gate valve for the particle inlet 9.

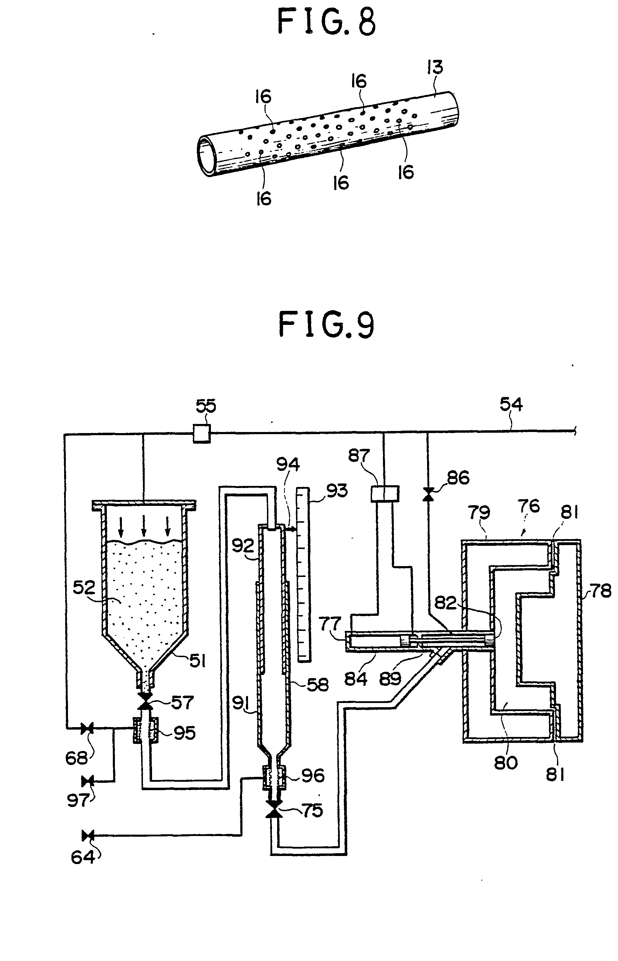

In order to keep the pre-foamed particles, which have been received in the pressurizing hopper 8, in a good pressurized state, a compressed air feed line 12 is connected to the pressurizing hopper 8. The feed line 12 is coupled to a perforated pipe 13 which is arranged within the pressurizing hopper 8. The perforated pipe 13 is in turn connected to an exhaust line 15 equipped with an exhaust valve 14. As illustrated in Figure 8, the perforated pipe 13 defines a number of minute perforations 16 through the circumferential wall thereof. The size of these minute perforations 16 may preferably be 40 mesh or greater in order to prevent pre-foamed particles and resin powder, which comes off from the surfaces of such pre-foamed particles, from entering the perforated pipe 13 through the minute perforations 16. The compressed air feed line 12 may be constructed in communication either with the compressed air feed line 4 connected to the pressurizing tank 1 or with an independent air tank. Numeral 17 indicates a pressurization regulator serving to control the pressure of the compressed air to be fed to the pressurizing hopper 8 at a prescribed level, while numeral 18 is a pressurizing valve.

As means for pressurizing the interior of the pressurizing hopper 8, compressed air may be fed to the pressurizing hopper 8 by way of the particle transfer line 6 instead of providing the compressed air feed line 12 as described above.

The pressurizing hopper 8 may be provided fixedly. Alternatively, it may also be provided turnably so that after completion of filling of pre-formed particles in a mold, any remaining pre-foamed particles may be recycled smoothly to the pressurizing hopper 8. As this turntable structure, a variety of structures may be contemplated. According to the structure shown by way of example in Figure 1, support shafts 19a, 19b are provided with their corresponding end walls of the pressurizing tank 8. One of the support shafts, namely, the support shaft 19a is turnably supported on a support frame 20, whereas the other support shaft, i.e., the support shaft 19b is coupled to a rotary cylinder 21, whereby rotating the support shaft 19b and in turn the pressurizing hopper 8.

To the particle outlet 10 of the pressurizing hopper 8, one end of a particle feed line 22 is connected. The other end of the feed line 22 is connected to a particle feed opening 24 of a molding machine 23. Therefore, an amount of the pre-foamed particles 2 which amount is required for a single molding operation can be fed from the pressurizing hopper 8 to the molding machine 23 while maintaining them in their pressurized state. Designated at numeral 25 is a gate valve for the particle outlet 10.

The molding machine 23 is equipped with a mold 26 and filling device 27. The mold 26 is composed of a movable core 28 and a fixedly-installed cavity 29. When both mold halves are closed, a molding compartment 30 is formed. Between the mutually-contacting portions of the core 28 and cavity 29, a cracking 31 may be provided as an air vent. On the other hand, the filling device 27 is equipped with a particle filling opening which opens in the surface of the cavity 29, a valve member 33 adapted to closably communicate the particle feed opening 24 with the particle filling opening 32, and an air cylinder 34 adapted to shift the valve member 33. There are also illustrated a compressed air feed line 35 for feeding and filling pre-foamed particles, which have been introduced to the particle feed opening 24 through the particle feed line 22 from the pressurizing hopper 8, into the molding compartment 30 by way of the particle filling opening 32, a filling air valve 36 provided with the feed line 35, and a directional control valve 37 adapted to change the feeding direction of air to the air cylinder 34. Although air feed lines 38 are connected to the compressed air feed line 35 in the illustrated embodiment, they may be separated from the feed line 35 and instead, may be supplied with air from an independent air source. The compressed air feed line 35 may be connected with the compressed air feed line 4 for the pressurizing tank 1. Alternatively, the compressed air feed line 35 may be provided without connecting it with the feed line 4 and instead, may take such as structure as receiving compressed air from an independent source.

The operation of the above-described production apparatus of this invention will next be described.

In Figure 1, the gate valve 7 for opening and closing the particle outlet 3 of the pressurizing tank 1, the gate valve 11 for opening and closing the particle inlet 9 of the pressurizing hopper 8 and the gate valve 25 for opening and closing the particle outlet 10 of the pressurizing hopper 8 as well as the pressurizing valve 18, exhaust valve 14 and filling air valve 36 are all in their closed state. Owing to compressed air fed to the pressurizing tank 1, the interior of the pressurizing tank 1 is pressurized to apply a predetermined internal pressure to the pre-foamed particles 2. The pressure of the interior of the pressurizing tank 1 is maintained at a predetermined level by means of the regulator 5. The interior pressure of the pressurizing tank 1 may be 0.196 to 19.62 bar (G) or preferably 0.49 to 9.81 bar (G).

The regulator 5 may be provided with a function which controls the pressure-raising velocity in the pressurizing tank 1. Provision of such a function has such a merit that the particles 2 may be pressurized little by little and the application of an internal pressure to the particles 2 may be carried out better depending on the type of their base resin. Namely, the pressure may first be kept rather low in the pressurizing tank 1. Making use of the above-mentioned controlling function of the regulator 5, the interior pressure of the pressurizing tank 1 is then raised little by little to reach an intended pressure level over a predetermined period of time. When particles are pressurized gradually as mentioned above, there is less danger of particle compression compared with a situation under which particles are abruptly pressurized to the predetermined pressure from the beginning. Hence, the predetermined internal pressure can be applied efficiently to the particles 2. When effecting the pressurization gradually in the above manner, it is preferred to control the pressure-raising velocity within 0.0147 to 0.49 bar (G)/hr. until the interior of the pressurizing tank 1 is pressurized to the above-described pressure level.

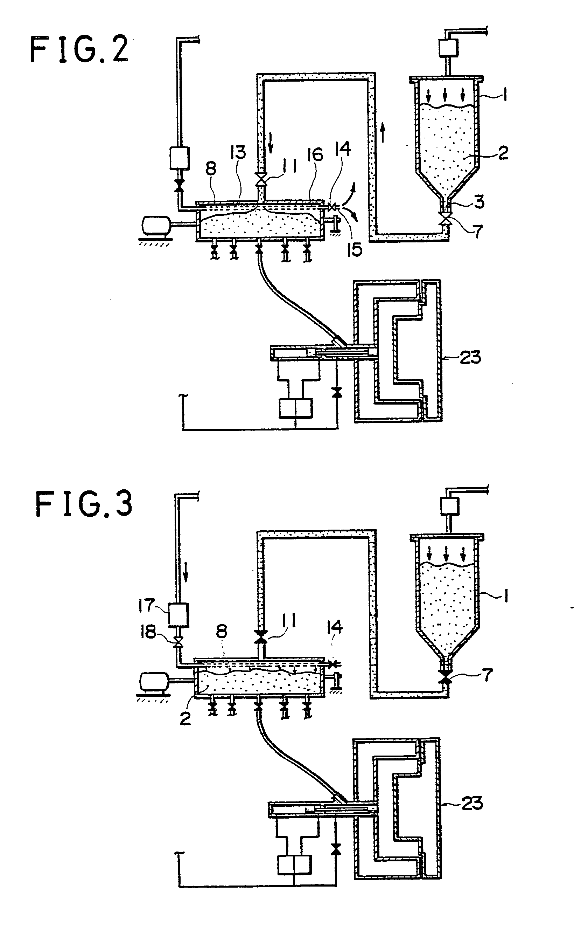

A suitable portion (for example, an amount necessary for several molding operations) of the pre-foamed particles 2, which have been kept under pressure in the pressurizing tank 1, is thereafter transferred to the pressurizing hopper 8. Upon effecting this transfer, the gate valve 7, gate valve 11 and exhaust valve 14 are all opened as depicted in Figure 2. Thus, the suitable portion of the pre-foamed particles 2 is pushed out of the pressurizing tank 1 owing to the interior pressure of the pressurizing tank 1 and is then transferred to the pressurizing hopper 8. The air in the pressurizing hopper 8 is in turn caused to flow through the minute perforations 16 of the perforated pipe 13 and is then exhausted via the exhaust line 15.

When the suitable portion of the pre-foamed particles has been transferred from the pressurizing tank 1 to the pressurizing hopper 8, the gate valve 7, gate valve 11 and exhaust valve 11 are closed and the pressurizing valve 18 is instead opened, whereby feeding compressed air into the pressurizing hopper 8 to pressurizing the pre-foamed particles 2 (see, Figure 3), The interior pressure of the pressurizing hopper 8 is maintained at a predetermined level by the regulator 17. the interior pressure of the pressurizing hopper 8 may be 0.196 to 19.62 bar (G) or preferably 0.49 to 9.81 bar (G). The interior pressure of the pressurizing hopper 8 may be set at a level either equal to or higher than the interior pressure of the pressurizing tank 1. In the latter case, it may be preferred to set the interior pressure of the pressurizing hopper 8 at a level 0.01—1.0 kg/cm$^2$ higher than the interior pressure of the pressurizing tank 1.

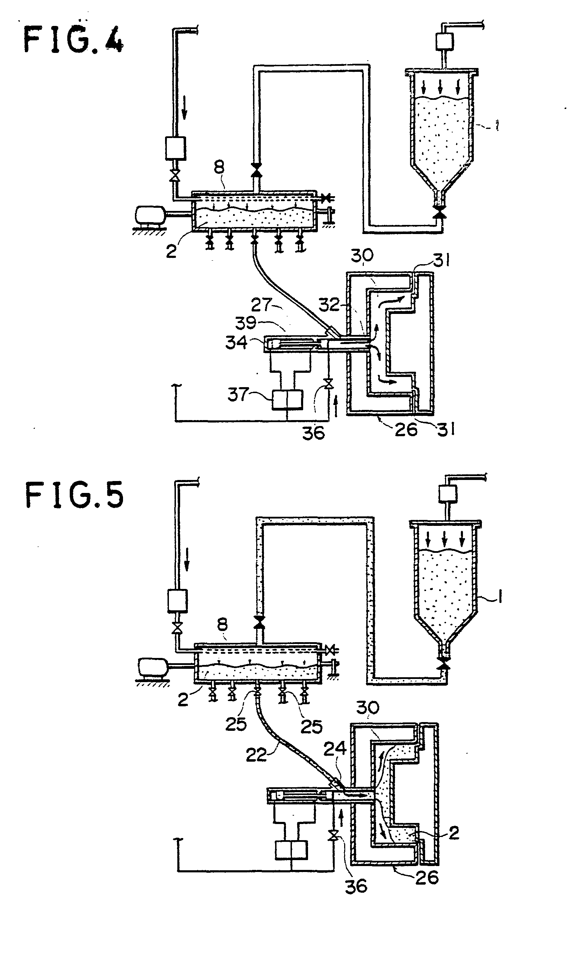

While the pre-foamed particles 2 are held under pressure within the pressurizing hopper 8, the directional control valve 37 is changed over to cause the piston rod 39 of the air cylinder 34 to retreat. Therefore, the particle filling opening 32 of the mold 26 is opened and at the same time, the filling air valve 36 is also opened so as to feed compressed air into the molding compartment 30 of the mold 26 and to discharge water and the like, which are deposited in the molding chamber 30, along with air through the cracking 31 (see, Figure 4).

The gate valve 25 for the particle outlet 10 of the pressurizing hopper 8 is then opened to push out the pre-foamed particles 2 by the interior pressure of the pressurizing hopper 8 from the pressurizing hopper 8. The pre-foamed particles 2 thereafter flows through the particle feed line 22 into the particle feed opening 24 of the filling device, followed by its further flow to the molding compartment 30 of the mold 26 by the compressed air supplied through the filling air valve 36 (see, Figure 5). Where the interior pressure of the

5

pressurizing hopper 8 is set at a level higher than the interior pressure of the pressurizing tank 1, it is possible to make the difference in interior pressure between the pressurizing hopper 8 and the molding compartment 30 sufficiently large without need for raising the interior pressure of the pressurizing tank 1 beyond the necessary level. As a result, the use of such an interior pressure for the pressurizing hopper 8 can bring about such merits that the pre-foamed particles 2 can be filled with ease, in a short period of time and with good efficiency in the molding compartment 30 and even if the molding compartment 30 has complex configurations, they can be filled into every corner of the molding compartment 30 without leaving any part of the molding compartment 30 un-filled.

It is however not preferred to compress the particles by an unduly high pressure upon their filling. It has been known to effect the expansion-molding of pre-foamed particles by pressurizing them, filling them in their compressed state in a mold and then molding them in the mold. According to this method, it may be able to solve to an extent the technical drawback which occurs due to the drop of internal pressure of the pre-foamed particles during their molding operation. Since the pre-foamed particles which have been filled in the mold have been compressed and their volumes have thus been reduced, the resulting expansion-molded article will have a higher density (in other words, a lower expansion ratio) compared with an expansion-molded article to be obtained from the same amount of pre-foamed particles in accordance with the pressureless filling technique. In other words, the above-mentioned pressure filling technique is disadvantageous as it requires, for obtaining an expansion-molded article of the same density (i.e., of the same expansion ratio) as that of an expansion-molded article available from the practice of the pressureless filling technique, pre-foamed particles having a higher expansion ratio compared with the molding method making use of the pressureless filling technique and it thus features poor expansion efficiency. Moreover, it required high pressure facilities to compress pre-foamed particles and is hence disadvantageous also from the economical viewpoint.

In order to control the compression of the particles to a slight degree, it is effective to fill the particles under pressure in the molding compartment 30 while maintaining the cracking 31 in the mold 26. The cracking can be formed by providing a gap between the mutually-contacting portions of the core 28 and cavity 29. A range of 0.8—10.0 mm is preferred as the gap.

When filling under pressure the pre-foamed particles from the pressurizing hopper 8 into the molding compartment 30, the filling pressure may be 0.49 to 9.81 bar (G). A filling pressure of 0.688 to 9.81 bar (G) may however be preferred for effecting a smooth filling operation without causing the particles to undergo any substantial volume reduction.

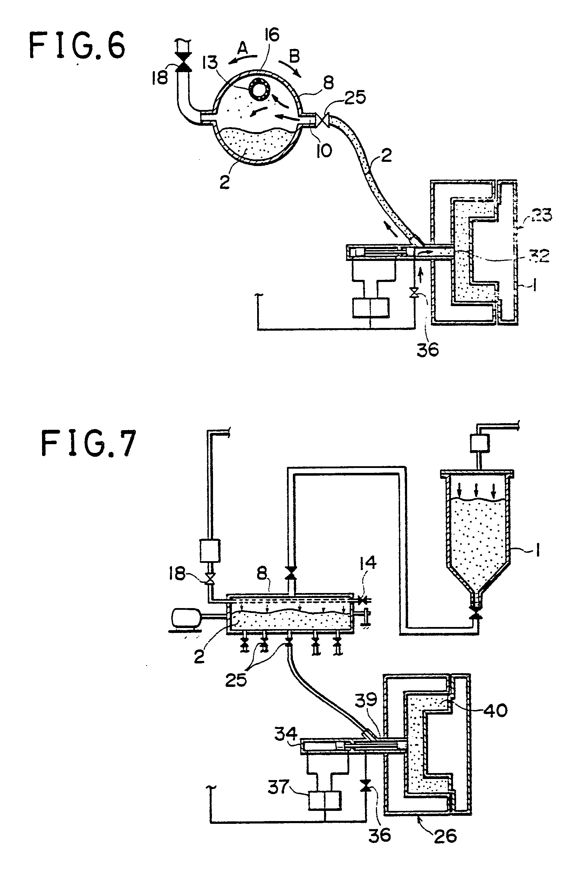

When a predetermined amount of the pre-foamed particles has been filled in the molding compartment 30, the pressurizing valve 18 is closed and the exhaust valve 14 is opened. At the same time, the rotary cylinder 21 is actuated, as illustrated in Figure 6, to turn the pressurizing hopper 8 over approximately 90° in the direction indicated by the arrow A until the particle outlet 10 of the pressurizing hopper 8 assumes substantially a horizontal position. Accordingly, the pre-foamed particles which have been left over between the particle filling opening 32 and particle outlet 10 are pushed back toward the pressurizing hopper 8. Here, the air present in the pressurizing hopper 8 is exhausted via the minute perforations 16 of the perforated pipe 13 and then through the exhaust valve 14. Furthermore, the directional control valve 37 is actuated to feed compressed air in a direction that the piston rod 39 of the air cylinder 34 is caused to advance. When the particle filling opening 32 of the molding compartment 30 is closed owing to the advancement of the piston rod 39, the pre-foamed particles remaining between the particle filling opening 32 and the particle outlet 10 are in their entirety pushed back to the pressurizing hopper 8 by the compressed air fed through the filling air valve 36. Thereafter, the gate valve 25 for the particle outlet 10 of the pressurizing hopper 8 is closed and the rotary cylinder 21 is actuated to turn the pressurizing hopper 8 in the direction indicated by the arrow B in Figure 6. The turning motion of the pressurizing hopper 8 is stopped when the particle outlet 8 has returned to its original position.

In the above case, the particle outlet 10 opens in the interior of the pressurizing hopper 8 as shown in Figure 6 after the pressurizing hopper 8 has been turned in the direction indicated by the arrow A. Since the particle outlet 10 is not closed by the particles held in the pressurizing hopper 8, no load is applied to the particle outlet 10 by the particles held in the pressurizing hopper 8. Therefore, it is possible to recycle smoothly and readily any remaining portion of the particles to the pressurizing hopper 8 after completion of their filling operation.

Needless to say, the angle over which the pressurizing hopper 8 is turnable is not limited to the above-described 90°. This angle can be suitably determined in accordance with the volume of the pressurizing hopper 8 and the amount of pre-foamed particles to be held in the pressurizing hopper 8. The above turnable angle may be of any value so long as the particle outlet 10 can be displaced to a position where the load of the particles present in the pressurizing hopper 8 to the particle outlet 10 is reduced. It is thus not limited to an angle capable of reducing the load to zero (i.e., to an angle by which the particle outlet 10 is brought to a position opening in the interior of the pressurizing hopper 8).

On the other hand, the exhaust valve 14 is closed and the pressurizing valve 18 is opened, thereby holding the remaining pre-foamed particles 2 under pressure in the pressurizing hopper 8. In the meantime, the pre-foamed particles which have been filled in the molding compartment of the mold 26 are heated by heating means such as steam, whereby to cause them to foam and expand and to obtain an expansion-molded article 40 conforming with the mold (see, Figure 7).

Figure 9 to Figure 13 illustrate a production apparatus according to another embodiment of this invention.

A pressurizing hopper 58 is composed of a fixed portion 91 and a movable portion 92 which is displaceable up and down relative to the fixed portion 91, so that its internal volume may be changed as desired. Designated at numeral 93 is an internal-volume indicating graduation. By an indicator needle 94 attached to the movable portion 92, the internal-volume indicating graduation is read.

Mesh-like exhaust filtered 95, 96 are provided respectively at a lower portion of a gate valve 57 for a particle outlet of the pressurizing tank 51 and at an upper portion of a gate valve 75 for a particle outlet of the pressurizing hopper 58. The positions of the exhaust filters 95, 96 are however not necessarily limited to those illustrated in Figure 9. The exhaust filter 95 may be provided at any point between the gate valve for the particle outlet of the pressurizing tank 51, whereas the position of the exhaust filter 96 may be chosen at any point between the particle outlet of the pressurizing hopper 59 and the gate valve 75.

In Figure 9, compressed air the pressure of which has been adjusted to a predetermined level by a pressurizing regulator 55 connected to a compressed air feed line 54 is fed to the pressurizing tank 51, whereby to keep pre-foamed particles 52 under a predetermined pressure. The vertical position of the movable portion 92 is adjusted in such a way that the pressurizing hopper 58 can have a volume sufficient to hold pre-foamed particles in an amount necessary for several molding operations depending on a molding compartment 80 of a mold 76.

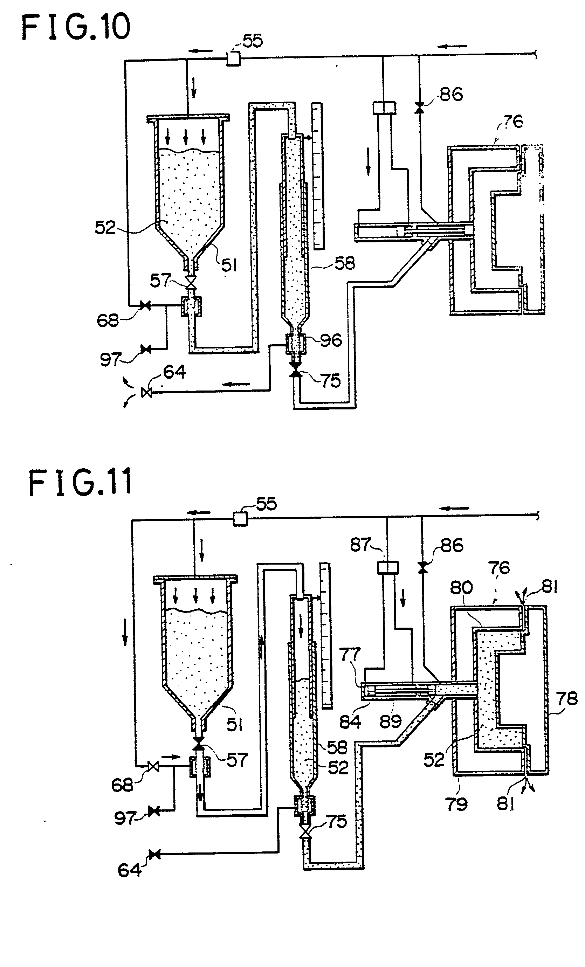

When the gate valve 57 and exhaust valve 64 are opened, the pre-foamed particles 52 are pushed out by the interior pressure of the pressurizing tank 51 from the pressurizing tank 51 and the air present in the pressurizing hopper 58 is exhausted via the mesh like air filter 96 and then through an exhaust valve 64. Thus, the pre-foamed particles are transferred to the pressurizing hopper 58 (see Figure 10). Upon completion of the transfer of the pre-foamed particles to the pressurizing hopper 58, the gate valve 57 and exhaust valves 64 are both closed. Hence, the pre-foamed particles 52 held in the pressurizing hopper 58 are pressurized to a predetermined level by compressed air fed through a pressurizing valve 68.

Thereafter, the directional control valve 87 is actuated to feed compressed iar in such a way that a piston rod 89 of an air cylinder 84 of a filling device 77 is retreated. This causes the gate valve 75 and a filling air valve 86 to open. Accordingly, the pre-foamed particles are pushed out of the pressurizing hopper 58 by the compressed air fed through the pressurizing valve 68. Then, the pre-foamed particles are delivered into the molding compartment 80 of the mold 76 by the compressed air supplied through the filling air valve 86 (see, Figure 11). Here, the air which has been delivered along with the pre-foamed particles to the molding compartment 80 is allowed to escape outside through a cracking 81 provided between a cavity 79 and core 78. Therefore, the pre-foamed particles 52 are filled under pressure in the molding compartment 80 of the mold 76 without reducing the volumes of the pre-foamed particles to any substantial extents.

When the pre-determined amount of the pre-foamed particles has been filled in the molding compartment 80, the pressurizing valve 68 is closed and an exhaust valve 97 is instead opened. Thus, any remaining pre-foamed particles are pushed back toward the pressurizing hopper 58 by the compressed air supplied through the filling air valve 86. Here, the air present in the pressurizing hopper 58 is exhausted first through the mesh like exhaust filter 95 provided at the lower portion of the gate valve 57 for the particle outlet of the pressurizing tank 51.

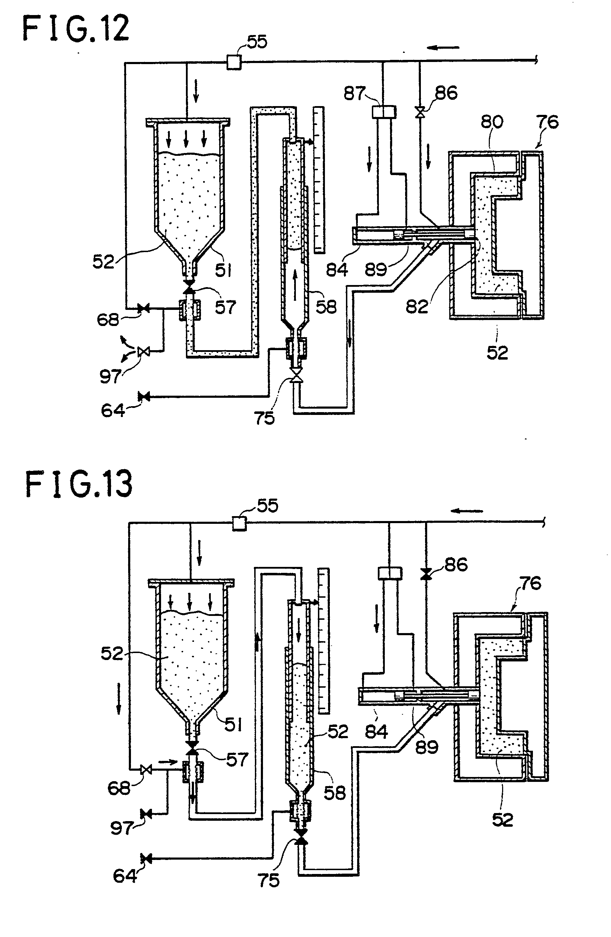

Then, the directional control valve 87 is switched over to feed compressed air in such a way that the piston rod 89 of the air cylinder 84 advances. Thus, the particle filling opening 82 for the molding compartment 80 is closed. Then, any remaining pre-foamed particles are pushed back in their entirety into the pressurizing hopper 58 by the compressed air supplied through the filling air valve 86 (see, Figure 12). Therafter, expansion-molding is carried out to obtain a molded article.

On the other hand, the exhaust valve 97, the gate valve 75 for the particle outlet of the pressurizing hopper 58 and the filling air valve 86 are all closed and the pressurizing valve 68 is opened. The remaining pre-foamed particles which have been pushed back to the pressurizing hopper 58 are thus kept under pressure by the compressed air fed through the pressurizing valve 68 until the production of the expansion-molded article is completed (see, Figure 13).

In the present invention, it may also be feasible to transfer pre-foamed particles in an amount necessary for a single molding operation to the pressurizing hopper 58 instead of transferring pre-foamed particles in an amount sufficient for several molding operations as mentioned in the above embodiment. Whichever transfer method is followed, it is preferred to set the internal volume of the pressurizing hopper 58 at a size somewhat greater than the volume required for holding the thus-transferred pre-foamed particles therein. It is also feasible to hold only the remaining pre-foamed particles, which has been recycled to the pressurizing hopper 58 after completion of their filling in the molding compartment 80, under pressure within the pressurizing hopper 58 while the molding of the thus-filled pre-foamed particles is carried out. Alternatively, additional pre-foamed particles in an amount equivalent to those consumed for the molding operation may be fed from the pressurizing tank 51 to the pressurizing hopper 58 and both of the thus-recycled remaining pre-foamed particles and the additional pre-foamed particles may then be held under pressure in the pressurizing hopper 58.

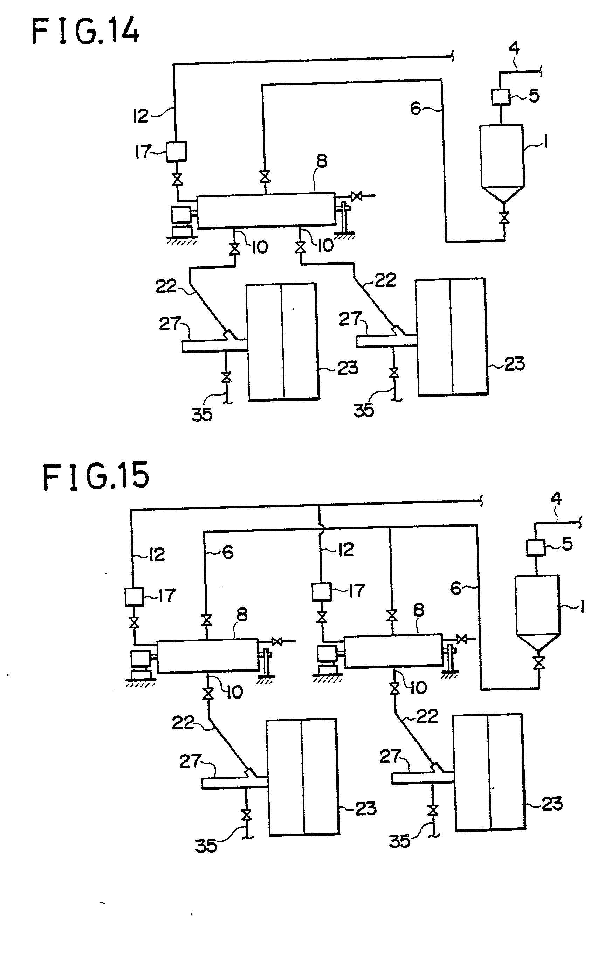

The present invention is however not limited to the combination of a single piece of the pressurizing hopper equipped with one or more particle outlets and a single piece of the molding machine. When the

7

pressurizing hopper is formed for example with an internal volume sufficient to hold particles in such an amount enough for several operation operations, it may be feasible, as shown in Figure 14, to provide a plurality of particle outlets 10 with the pressurizing hopper and a plurality of molding machine 23, the number of which is the same as that of the particle outlets 10, and to connect the particle outlets 10 respectively with the molding machines 23 by way of their corresponding feed lines 22. By constructing the production machine in the above manner, a plurality of molding operations can be performed either concurrently or continuously one after another.

Furthermore, the present invention is not necessarily limited to the use of a single piece of pressurizing hopper. As illustrated in Figure 15, a plurality of pressurizing hoppers may be provided and a molding machine may be connected to each of the pressurizing hoppers. This arrangement enables to conduct molding operations either concurrently or continuously one after another.

The present invention will next be described in further detail by the following specific Examples.

## Examples 1—4

Using the apparatus shown in Figure 9, pre-foamed particles shown in Table 1 were subjected to a pressure treatment with air in the pressurizing tank to apply the internal pressure, also given in Table 1, to them. Then, the pre-foamed particles in the pressurizing tank were held under the pressure given in Table 1.

Thereafter, the pre-foamed particles were transferred from the pressurizing tank to the pressurizing hopper, in which they were pressurized under the same pressure as in the pressurizing tank. The pre-foamed particles were then filled under the pressure given in Table 1 in a mold having internal dimensions of 300 mm × 300 mm × 50 mm and provided with a cracking of 3 mm wide. Pre-foamed particles which had been left over after completion of the filling in the mold were pushed back into the pressurizing hopper, in which they were held under the same pressure as the interior pressure of the pressurizing tank until completion of the molding. The internal volume of the pressurizing hopper was set at a size sufficient to hold pre-foamed particles in an amount necessary for 5 molding operations. For heating the pre-foamed particles in the molding compartment, steam of 3.14 bar (G) was employed. Fifteen molding operations were conducted continuously to obtain 15 pieces of expansion-molded articles. The surface conditions, average shrinkage factors and dimensional variations of surfaces of the fifteen expansion-molded articles were measured. Measurement results are shown in Table 1.

## Comparative Examples 1—4

Pre-expanded particles, which had been subjected to a pressure treatment and applied with an internal pressure in the same manner as in each of the above Examples, were taken out under atmospheric pressure in an amount necessary for five molding operations from the pressurizing tank. They were then held in a filling hopper of an open structure. From the hopper, the pre-foamed particles were filled in the same mold as that used in Examples 1—4, followed by the their molding with steam of 3.14 bar (G). Fifteen pieces of expansion-molded articles were obtained in each of the Comparative Examples. The pre-foamed particles in the filling hopper were held under atmospheric pressure util the molding operations were completed. The surface conditions, average shrinkage factors and dimensional variations of surfaces of the fifteen expansion-molded articles were measured. Measurement results are also shown in Table 1.

## Examples 5—8

In each of the Examples, fifteen pieces of molded containers were obtained in the same manner as in Examples 1—4, using pre-foamed particles given in Table 1 which had been subjected to a pressure treatment with air in the pressurizing tank and applied with an internal pressure employing as a mold a mold for containers having an internal opening diameter of 90 mm and a depth of 105 mm, using steam of 4.91 bar (G) for heating, and setting the interior pressure of the pressurizing tank and the filling pressure respectively at the values given in Table 2. Properties of these containers were measured. Measurement results are summarized in Table 2.

## Comparative Examples 5—8

Pre-foamed particles, which had been subjected to a pressure treatment and applied with an internal pressure in Examples 5—8, were taken out under atmospheric pressure from the pressurizing tank. A portion of the pre-foamed particles which portion was sufficient for five molding operations was held in a hopper of an open structure and was then filled in the same container-molding mold as that employed in Examples 5—8 in the same manner as in Comparative Examples 1—4. They were heated with steam of 4.91 bar (G) to achieve their molding. Fifteen containers were obtained in each of the Comparative Examples. Properties of the thus-obtained containers were measured. Measurement results are also summarized in Table 2.

TABLE 1

| | | Pre-expanded particles | | | Internal pressure in pressurizing tank (bar·G) | Filling pressure (bar·G) | Expansion-molded article | | | |
|---|---|---|---|---|---|---|---|---|---|---|
| | | Base resin | Particle diameter (mm) | Internal pressure after pressure treatment (bar·G) | | | Expansion ratio (times) | Average shrinkage factor[1] (%) | Dimensional variation[2] | Overall evaluation |
| Example | 1 | Ethylene-propylene random copolymer | 6—7 | 1.47 | 1.96 | 1.96 | 30 | 1.4 | 0.59 | ○ |
| | 2 | ditto | 4.5—5 | 1.18 | 1.96 | 0.98 | 30 | 1.8 | 1.11 | ○ |
| | 3 | ditto | 5—6 | 1.28 | 1.28 | 0.78 | 15 | 1.2 | 0.45 | ○ |
| | 4 | ditto | 5—6 | 1.18 | 1.96 | 1.96 | 45 | 1.8 | 0.85 | ○ |
| Comparative Example | 1 | The same as Example 1 | | | | — | 30 | 2.2 | 2.24 | × |
| | 2 | The same as Example 2 | | | | — | 30 | 2.3 | 2.38 | × |
| | 3 | The same as Example 3 | | | | — | 15 | 1.4 | 1.85 | × |
| | 4 | The same as Example 4 | | | | — | 45 | 2.5 | 2.03 | × |

EP 0 153 706 B1

TABLE 2

| | | Pre-expanded particles | | | Internal pressure in pressurizing tank (bar·G) | Filling pressure (bar·G) | Expansion-molded article (Container) | | | | |
|---|---|---|---|---|---|---|---|---|---|---|---|
| | | Base resin | Particle diameter (mm) | Internal pressure after pressure treatment (bar·G) | | | Expansion ratio (times) | Thickness (mm) | Fusion bondability particles[3] | Surface conditions[4] | Overall evaluation |
| Example | 5 | Ethylene-propylene random copolymer | 0.8—1.3 | 4.91 | 4.91 | 4.91 | 7.6 | 2.7 | O | O | O |
| | 6 | ditto | 0.8—1.4 | 3.43 | 4.91 | 6.87 | 8.3 | 3.2 | O | O | O |
| | 7 | ditto | 1.3—1.6 | 3.43 | 4.91 | 2.94 | 10.2 | 3.2 | O | O | O |
| | 8 | ditto | 1.3—1.6 | 2.45 | 4.91 | 0.78 | 10.2 | 3.3 | O | O | O |
| Comparative Example | 5 | The same as Example 5 | | | | — | 7.6 | 2.7 | △ | △ | × |
| | 6 | The same as Example 6 | | | | — | 8.3 | 3.2 | △ | × | × |
| | 7 | The same as Example 7 | | | | — | 10.2 | 3.2 | △ | × | × |
| | 8 | The same as Example 8 | | | | — | 10.2 | 3.2 | × | × | × |

Note:

[1] The average of shrinkage factors of fifteen expansion-molded articles along the surface of the mold.

[2] Determined by measuring the dimensions of the surfaces of fifteen expansion-molded articles and expressed as standard deviation ($\delta_{n-1}$) of the dimensions for the average of the measured values.

[3] Parts of fifteen containers were bent to rupture them. The rupture cross-sections of the fragments were observed. The observation results were evaluated under the following standard:

O — No interparticle cut-off. Samples containing ruptured particles: less than 10%

△ — Samples containing interparticle cut-off: 25—10%.

× — Samples containing interparticle cut-off: over 25%.

[4] The surfaces of fifteen expansion-molded articles were observed. The observation results were evaluated under the following standard:

O — The entire surfaces were smooth. They contained extremely little ruggedness.

△ — Samples containing somewhat large surface ruggedness: 25—10%.

× — Samples having poor surface smoothness and extremely large ruggedness: over 25%.

EP 0 153 706 B1

When the method of this invention is practiced using the production apparatus shown in Figure 9 instead of that illustrated in Figure 1, it is also possible to exhibit the same advantageous effects as those achieved in the above Examples which were carried out using the production apparatus shown in Figure 9, and hence to provide expansion-molded articles which are excellent in both properties and quality. Compared with the production apparatus depicted in Figure 9, the production apparatus shown in Figure 1 had a merit that after completion of filling particles in a mold, any remaining particles can be recycled readily and smoothly.

Having now fully described the invention, it will be apparent to one of ordinary skill in the art that many changes or modifications can be made thereto without departing from the spirit or scope of the invention as set forth herein.

**Claims**

1. A method for producing an expansion-molded article (40) of a thermoplastic resin, which comprises:
transferring a suitable portion of pre-foamed particles (2; 52) of the thermoplastic resin to a pressurizing hopper (8; 58) and holding the thus-transferred pre-foamed particles (2; 52) under pressure in the pressurizing hopper (8; 58);
filling under pressure a predetermined amount of the pre-foamed particles (2; 52) from the pressurizing hopper into a mold (26; 76); and
heating the thus-filled pre-foamed particles (2; 52) within the mold (26; 76) so as to cause the pre-foamed particles (2; 52) to foam and expand, thereby fusion-bonding the resulting expanded particles to obtain the expansion-molded article (40) of the thermoplastic resin; characterized in that the pre-foamed particles (2; 52) have been kept under pressure in a pressurizing tank (1; 51) before transferring them to the pressurizing hopper (2).

2. The method according to claim 1, characterized in that the internal pressures of the pressurizing tank (1; 51) and pressurizing hopper (8; 58) are respectivley from 0.196 to 19.62 bar (G) and the filling pressure upon filling the pre-foamed particles (2; 52) into the mold (26; 76) ranges from 0.49 to 9.81 bar (G).

3. The method according to claim 1, characterized in that the supply of pressure into the pressurizing tank (1; 51) is controlled in such a way that the pre-foamed particles (2; 52) in the pressurizing tank (1; 51) are gradually pressurized at a pressure-raising velocity of 0.0147 to 0.49 bar (G)/hr.

4. The method according to claim 1, characterized in that the internal pressure of the pressurizing hopper (8; 58) is raised by feeding the internal pressure if the pressurizing tank (1; 51) to the pressurizing hopper (8; 58) via a particle transfer line (6) connecting the pressurizing tank (1; 51) and pressurizing hopper (8; 58) together, or by pressure feed means (12) provided separately from the particle transfer line (6).

5. The method according to claim 2, characterized in that the internal pressure of the pressurizing hopper (8; 58) is set at the same level as the internal pressure of the pressurizing tank (1; 51) or at a pressure higher by 0.0098 to 0.981 bar than the internal pressure of the pressurizing tank (1; 51).

6. The method according to claim 1, characterized in that after completion of the filling of the pre-foamed particles in the mold (26; 76), any remaining portion of the pre-foamed particles (2; 52) is recycled to the pressurizing hopper (8; 58) and is then held under pressure there.

7. The method for producing an expansion-molded article (40) of a thermoplastic resin, which method comprises:
transferring a suitable portion of pre-foamed particles (2; 52) of the thermoplastic resin to a pressurizing hopper (8; 58) and holding the thus-transferred pre-foamed particles (2; 52) under pressure in the pressurizing hopper (8; 58);
filling under pressure a predetermined amount of the pre-foamed particles (2; 52) from the pressurizing hopper (8; 58) into a mold (26; 76); and
heating the thus-filled pre-foamed particles (2; 52) within the mold (26; 76) so as to cause the pre-foamed particles (2; 52) to foam and expand, thereby fusion-bonding the resulting expanded particles to obtain the expansion-molded article (40) of the thermoplastic resin; characterized in that said pre-foamed particles (2; 52) have been kept under pressure in a pressurizing tank (1; 51) and that said pre-foamed particles (2; 52) are filled into the mold (26; 76) without substantial volume reduction of the thus-filled particles (2; 52) while maintaining a cracking (31; 81) in the mold (26; 76).

8. The method according to claim 7, characterized in that the cracking (31; 81) of the mold (26; 76) is formed by providing a gap of 0.8—10.00 mm width between the mutually-contacting portions of the core (28; 78) and cavity (29; 79) of the mold (26; 76).

9. The method according to claim 7, characterized in that the filling pressure upon filling the pre-foamed particles (2; 52) into the mold (26; 76) ranges from 0.49 to 9.81 bar (G).

10. An apparatus suitable for use in the production of an expansion-molded article (40) of a thermoplastic resin, which comprises:
at least one pressurizing hopper (8; 58) including a particle inlet (9) and a particle outlet (10) and adapted to hold a suitable portion of the particles (2; 52), which suitable portion has been transferred thereto, and then to feed an amount of the particles (2; 52) which amount is desired for molding the expansion-molded article (40);

11

a gate mechanism (25; 75) for openably closing the particle outlet (10) of the pressurizing hopper (8; 58);

at least one molding machine (23) equipped with a molding compartment (30; 80), in which the particles (2; 52) are to be filled, and heating means for heating the thus-filled particles (2; 52) to cause the thus-filled particles (2; 52) to expand; and

a particle filling system (22, 27; 77) for causing the particles (2; 52) to flow out from the pressurizing hopper (8; 58) through the particle outlet (10) thereof and then for filling the particles (2; 52) into the molding compartment (30; 80) through a particle filling opening (32; 82), while maintaining the particles (2; 52) in the pressurized state; characterized by

a pressurizing tank (1; 51) having an internal volume sufficient to keep pre-foamed particles (2; 52) of the thermoplastic resin therein and including a particle outlet (3);

a pressure feed system (4; 54) for pressurizing the interior of the pressurizing tank (1; 51) so as to apply a predetermined internal pressure to the particles (2; 52); and

particle transfer means (6) for causing, while maintaining the suitable portion of the particles (2; 52) in the pressurized state, the suitable portion of the particles (2; 52) to flow out from the pressurizing tank (1; 51) through the particles outlet (3) and then to enter the pressurizing hopper (8; 58) through the particle inlet (9) thereof.

11. The apparatus according to claim 10, characterized in that the particle outlet (3) of the pressurizing tank (1; 51) and the particle inlet (9) of the pressurizing hopper (8; 58) are connected by a particle transfer line (6) and the particle outlet (10) of the pressurizing hopper (8; 58) and a particle feed opening (24) of the molding machine (23), which particle feed opening (24) is in communication with the particle filling opening (32; 82), are connected by a particle feed line (22), so that the transfer of the pre-foamed particles (2; 52) and the filling of the same in the molding compartment (30; 80) are effected respectively through the particle transfer line (22) and particle feed line (22).

12. The apparatus according to claim 11, characterized in that the pressurizing hopper (8) is provided with a plurality of particle outlets (10), to which one or more molding machines (23), each of the same type as said at least one molding machine (23), are connected.

13. The apparatus according to claim 11, characterized in that the apparatus includes a plurality of pressurizing hoppers (8), each of the same type as the pressurizing hopper (8), to each of which a molding machine (23) of the same type as said at least one molding machine (23) is connected.

14. The apparatus according to claim 10, characterized in that a perforated pipe (13) of at least 40 mesh is provided within the pressurizing hopper (8), one end of the perforated pipe (13) is connected to a pressure feed line (12) for pressurizing the interior of the pressurizing hopper (8), and the other end of the perforated pipe (8) is connected to an exhaust line (15) for reducing the interior pressure of the pressurizing hopper (8).

15. The apparatus according to claim 10, characterized in that the pressurizing hopper (8) is provided turnably so that upon recycling any remaining portion of the pre-foamed particles (2) to the pressurizing hopper (8) after completion of its filling in the molding compartment (30), the particle outlet (10) of the pressurizing hopper (8) is displaceable to a position where the load of the pre-foamed particles (2) in the pressurizing hopper (8) to the particle outlet (10) of the pressurizing hopper (8) is reduced to facilitate the return of the remaining portion of the pre-foamed particles (2).

16. The apparatus according to claim 10, characterized in that the pressurizing hopper (58) is composed of a fixed portion (91) and a movable portion (92), the latter portion (92) being displaceable up and down relative to the former portion (91), so as to render the internal volume of the pressurizing hopper (58) variable, and is equipped with a graduation (93) for the indication of the volume of particles (52) held therein.

17. The apparatus according to claim 16, characterized in that a gate mechanism (7; 57) is provided for openably closing the particle outlet (3) of the pressurizing tank (1; 51).

18. The apparatus according to claim 17, characterized in that mesh-like exhaust filters (95, 96) are provided respectively between the gate mechanism (57) for the pressurizing tank (51) and the particle inlet of the pressurizing hopper (58) and between the particle outlet of the pressurizing hopper (58) and the gate mechanism (75) for the pressurizing hopper (58).

## Patentansprüche

1. Verfahren zur Herstellung eines expansionsgeformten Artikels (40) aus einem thermoplastischen Harz, welches folgendes umfaßt:

Überführen eines geeigneten Teils von vorgeschäumten Teilchen (2; 52) aus dem thermoplastischen Harz zu einem unter Druck setzenden Trichter (8; 58) und Halten der auf diese Weise überführten vorgeschäumten Teilchen (2; 22) unter Druck in dem unter Druck setzenden Trichter (8; 58);

Füllen einer vorbestimmten Menge der vorgeschäumten Teilchen (2; 52) von dem unter Druck setzenden Trichter unter Druck in eine Form (26; 76); und

Erhitzen der auf diese Weise eingefüllten vorgeschäumten Teilchen (2; 52) innerhalb der Form (26; 76) so, daß bewirkt wird, daß die vorgeschäumten Teilchen (2; 52) schäumen und expandieren, so daß dadurch die resultierenden expandierten Teilchen schmelzgebunden werden, um den expansionsgeformten Artikel (40) aus dem thermoplastischen Harz zu erhalten;

dadurch gekennzeichnet, daß die vorgeschäumten Teilchen (2; 52) unter Druck in einem unter Druck setzenden Tank (1; 51) gehalten worden sind, bevor sie zu dem unter Druck setzenden Trichter überführt werden.

2. Verfahren nach Anspruch 1, dadurch gekennzeichnet, daß die Innendrücke des unter Druck setzenden Tanks (1; 51) und unter Druck setzenden Trichters (8; 58) jeweils von 0,196 bis 19,62 bar (Ü) sind und der Fülldruck beim Füllen der vorgeschäumten Teilchen (2; 52) in die Form (26; 76) im Bereich von 0,49 bis 9,81 bar (Ü) ist.

3. Verfahren nach Anspruch 1, dadurch gekennzeichnet, daß die Zuführung von Druck in den unter Druck setzenden Tank (1; 51) in einer solchen Weise gesteuert wird, daß die vorgeschäumten Teilchen (2; 52) in dem unter Druck setzenden Tank (1; 51) allmählich mit einer Druckanstiegsgeschwindigkeit von 0,0147 bis 0,49 bar (Ü)/h unter Druck gesetzt werden.

4. Verfahren nach Anspruch 1, dadurch gekennzeichnet, daß der Innendruck des unter Druck setzenden Trichters (8; 58) erhöht wird durch Zuführen des Innendrucks des unter Druck setzenden Tanks (1; 51) zu dem unter Druck setzenden Trichter (8; 58) über eine Teilchenüberführungsleitung (6), die den unter Druck setzenden Tank (1; 51) und den unter Druck setzenden Trichter (8; 58) miteinander verbindet, oder durch eine Druckzuführungseinrichtung (12), die separat von der Teilchenüberführungsleitung (6) vorgesehen ist.

5. Verfahren nach Anspruch 2, dadurch gekennzeichnet, daß der Innendruck des unter Druck setzenden Trichters (8; 58) auf das gleiche Niveau wie der Innendruck des unter Druck setzenden Tanks (1; 51) eingestellt wird oder auf einen Druck, der um 0,0098 bis 0,981 bar höher als der Innendruck des unter Druck setzenden Tanks (1; 51) ist.

6. Verfahren nach Anspruch 1, dadurch gekennzeichnet, daß nach Vollendung des Einfüllens der vorgeschäumten Teilchen in die Form (26; 76) irgendein überschüssiger Teil der vorgeschäumten Teilchen (2; 52) zu dem unter Druck setzenden Trichter (8; 58) zurückgeführt und dann dort unter Druck gehalten wird.

7. Verfahren sur Herstellung eines expansionsgeformten Artikels (40) aus einem thermoplastischen Harz, welches Verfahren folgendes umfaßt:

Überführen eines geeigneten Teils von vorgeschäumten Teilchen (2; 52) aus dem thermoplastischen Harz zu einem unter Druck setzenden Trichter (8; 58) und Halten der so überführten vorgeschäumten Teilchen (2; 22) unter Druck in dem unter Druck setzenden Trichter (8; 58);

Füllen einer vorbestimmten Menge der vorgeschäumten Teilchen (2; 52) von dem unter Druck setzenden Trichter (8; 58) unter Druck in eine Form (26; 76); und

Erhitzen der auf diese Weise eingefüllten vorgeschäumten Teilchen (2; 52) innerhalb der Form (26; 76) so, daß bewirkt wird, daß die vorgeschäumten Teilchen (2; 52) schäumen und expandieren, so daß dadurch eine Schmelzbindung der resultierenden expandierten Teilchen erfolgt, um den expansionsgeformten Artikel (40) aus dem thermopalstischen Harz zu erhalten;

dadurch gekennzeichnet, daß die vorgeschäumten Teilchen (2; 52) stets unter Druck in einem unter Druck setzenden Tank (1; 51) gehalten worden sind und daß die vorgeschäumten Teilchen (2; 52) in die Form (26; 76) gefüllt werden ohne wesentliche Volumenverbindung der auf diese Weise eingefüllten Teilchen (2; 52), während eine Spaltbildung (31; 81) in der Form (26; 76) aufrechterhalten wird.

8. Verfahren nach Anspruch 7, dadurch gekennzeichnet, daß die Spaltbildung (31; 81) der Form (26; 76) dadurch gebildet wird, daß ein Spalt von 0,8 bis 10,00 mm Weite zwischen den sich gegenseitig kontaktierenden Teilen des Kerns (28; 78) und dem Hohlraum (29; 79) der Form (26; 76) vorgesehen wird.

9. Verfahren nach Anspruch 7, dadurch gekennzeichnet, daß der Fülldruck beim Einfüllen der vorgeschäumten Teilchen (2; 52) in die Form, (26; 76) im Bereich von 0,49 bis 9,81 bar (Ü) liegt.

10. Einrichtung, die für die Verwendung bei der Herstellung eines expansionsgeformten Artikels (40) aus einem thermoplastischen Harz geeignet ist, welche folgendes umfaßt:

wenigsten einen unter Druck setzenden Trichter (8; 58), der einen Teilcheneinlaß (9) und einen Teilchenauslaß (10) hat und dazu geeignet ist, einen geeigneten Teil der Teilchen (2; 52) zu fassen, welcher geeignete Teil zu demselben überführt worden ist, und dann eine Menge der Teilchen (2; 52) zuzuführen, welche Menge für das Formen des expansionsgeformten Artikels (40) erwünscht ist;

einen Gattermechanismus (25; 75) zum aufmachbaren Schließen des Teilchenauslasses (10) des unter Druck setzenden Trichters (8; 58);

wenigstens eine Formungsmaschine (23), die mit einem Formungsabteil (30; 80) ausgerüstet ist, in welches die Teilchen (2; 52) zu füllen sind, und eine Erhitzungseinrichtung zum Erhitzen der auf diese Weise eingefüllten Teilchen (2; 52) zum Bewirken, daß die auf die Weise eingefüllten Teilchen (2; 52) expandieren; und

ein Teilcheneinfüllsystem (22, 27; 77) zum Bewirken, daß die Teilchen (2; 52) aus dem unter Druck setzenden Trichter (8; 58) durch den Teilchenauslaß (10) desselben ausströmen und dann zum Einfüllen der Teilchen (2; 52) in das Formungsabteil (30; 80) durch eine Teilcheneinfüllöffnung (32; 82), während die Teilchen (2; 52) in dem unter Druck gesetzten Zustand gehalten werden; gekennzeichnet durch

einen unter Druck setzenden Tank (1; 51), der ein inneres Volumen hat, das ausreicht, vorgeschäumte Teilchen (2; 52) des thermoplastischen Harzes darin zu halten und der einen Teilchenauslaß (3) aufweist;

ein Druckzuführungssystem (4; 54) zum Unterdrucksetzen des Inneren des unter Druck setzenden Tanks (1; 51), so daß ein vorbestimmter innerer Druck auf die Teilchen (2; 52) angewandt wird; und

EP 0 153 706 B1

eine Teilchenüberführungseinrichtung (6) zum Bewirken, daß, während der geeignete Teil der Teilchen (2; 52) in dem unter Druck gesetzten Zustand gehalten wird, der geeignete Teil der Teilchen (2; 52) aus dem unter Druck setzenden Tank (1; 51) durch den Teilchenauslaß (3) ausströmt und dann in den unter Druck setzenden Trichter (8; 58) durch den Teilcheneinlaß (9) desselben eintritt.

11. Einrichtung nach Anspruch 10, dadurch gekennzeichnet, daß der Teilchenauslaß (3) des unter Druck setzenden Tanks (1; 51) und der Teilcheneinlaß (9) des unter Druck setzenden Trichters (8; 58) durch eine Teilchenüberführungsleitung (6) verbunden sind, und daß der Teilchenauslaß (10) des unter Druck setzenden Trichters (8; 58) und eine Teilchenzuführungsöffnung (24) der Formungsmaschine (23), welche Teilchenzuführungsöffnung (24) in Verbindung mit der Teilcheneinfüllöffnung (32; 28) ist, durch eine Teilchenzuführungsleitung (22) verbunden sind, so daß die Überführung der vorgeschäumten Teilchen (2; 52) und das Einfüllen derselben in das Formungsabteil (30; 80) jeweils durch die Teilchenüberführungsleitung (6) und die Teilchenzuführungsleitung (22) bewirkt wird.

12. Einrichtung nach Anspruch 11, dadurch gekennzeichnet, daß der unter Druck setzende Trichter (8) mit einer Mehrzahl von Teilchenauslässen (10) versehen ist, mit denen eine oder mehrere Formumgsmaschinen (23), jede von der gleichen Art wie die wenigstens eine Formungsmaschine (23), verbunden sind.

13. Einrichtung nach Anspruch 11, dadurch gekennzeichnet, daß die Einrichtung eine Mehrzahl von unter Druck setzenden Trichtern (8) aufweist, jeder von der gleichen Art wie der unter Druck setzende Trichter (8), wobei mit jedem von diesen eine Formungsmaschine (23) von der gleichen Art wie die wenigstens eine Formungsmaschine (23) verbunden ist.

14. Einrichtung nach Anspruch 10, dadurch gekennzeichnet, daß ein perforiertes Rohr (13) von wenigstens 40 Mesh innerhalb des unter Druck setzenden Trichters (8) vorgesehen ist, wobei das eine Ende des perforierten Rohrs (13) mit einer Druckzuführungsleitung (12) für das Unterdrucksetzen des Inneren des unter Druck setzenden Trichters (8) verbunden ist, und wobei das andere Ende des perforierten Rohrs (8) mit einer Austrittsleitung (15) zum Vermindern des inneren Drucks des unter Druck setzenden Trichters (8) verbunden ist.

15. Einrichtung nach Anspruch 10, dadurch gekennzeichnet, daß der unter Druck setzende Trichter (8) drehbar vorgesehen ist, so daß beim Zurückführen von irgendeinem überschüssigen Teil der vorgeschäumten Teilchen (2) zu dem unter Druck setzenden Trichter (8) nach Vollenden von dessen Einfüllen in das Formungsabteil (30) der Teilchenauslaß (10) des unter Druck setzenden Trichters (8) in eine Position verlagerbar ist, wo die Belastung der vorgeschäumten Teilchen (2) in dem unter Druck setzenden Trichter (8) auf den Teilchanauslaß (10) des unter Druck setzenden Trichters (8) vermindert ist, so daß das Rückführen des überschüssigen Teils der vorgeschäumten Teilchen (2) erleichtert wird.

16. Einrichtung nach Anspruch 10, dadurch gekennzeichnet, daß der unter Druck setzende Trichter (58) aus einem ortsfesten Teil (91) und einem bewegbaren Teil (92) zusammengesetzt ist, wobei der letztere Teil (92) aufwärts und abwärts relativ zu dem ersteren Teil (91) verlagerbar ist, so daß das innere Volumen des unter Druck setzenden Trichters (58) variabel gemacht ist, und mit einer Graduierung (93) für das Anzeigen des Volumens der darin enthaltenen Teilchen (52) ausgerüstet ist.

17. Einrichtung nach Anspruch 16, dadurch gekennzeichnet, daß ein Gattermechanismus (7; 57) für das aufmachbare Schließen des Teilchenauslasses (3) des unter Druck setzenden Tanks (1; 51) vorgesehen ist.

18. Einrichtung nach Anspruch 17, dadurch gekennzeichnet, daß siebartige Austrittsfilter (95, 96) jeweils zwischen dem Gattermechanismus (57) für den unter Druck setzenden Tank (51) und dem Teilcheneinlaß des unter Druck setzenden Trichters (58) und zwischen dem Teilchenauslaß des unter Druck setzenden Trichters (58) und dem Gattermechanismus (75) für den unter Druck setzenden Trichter (58) vorgesehen sind.

## Revendications

1. Procédé pour la fabrication d'objets moulés par expansion (40) en une matière thermoplastique, qui consiste

à transférer une portion convenable de particules pré-moussées (2; 52) de la résine thermoplastique dans une trémie de maintien sous pression ou pressurisation (8; 58) et à maintenir les particules pré-moussées (2; 52), ainsi transférées, sous pression dans la trémie de pressurisation (8; 58);

à remplir sous pression avec une quantité prédéterminée des particules pré-moussées (2; 52) en provenance de la trémie de pressurisation, un moule (26; 76); et

à soumettre les particules pré-moussées (2; 52), remplissant ainsi le moule (26; 76), à un chauffage à l'intérieur de celui-ci de manière à provoquer le moussage et l'expansion des particules pré-moussées (2; 52), et, de ce fait, lier par fusion les particules expansées résultantes avec obtention de l'objet moulé par expansion (40) en la résine thermoplastiqué;

caractérisé en ce que les particules pré-mousées (2; 52) sont préalablement maintenues sous pression dans un réservoir de pressurisation (1; 51), avant leur transfert dans la trémie de pressurisation.

2. Procédé selon la revendication 1, caractérisé en ce que les pressions internes du réservoir de pressurisation (1; 51) et de la trémie de pressurisation (8; 58) sont respectivement de 0,196 à 19,62 bars (manométriques) et que la pression de remplissage appliquée lors du remplissage du moule (26; 76) avec les particules pré-moussées (2; 52), est située dans l'intervalle de 0,49 à 9,81 bars (manométriques).

3. Procédé selon la revendication 1, caractérisé en ce qu'on règle l'alimentation en pression du réservoir de pressurisation (1; 51) de telle manière que les particules pré-moussées (2; 52) du réservoir de pressurisation (1; 51) soient graduellement mises sous pression à une vitesse d'élévation de pression de 0,0147 à 0,49 bar (manométrique)/heure.

4. Procédé selon la revendication 1, caractérisé en ce qu'on élève la pression interne de la trémie de pressurisation (8; 58) en alimentant avec la pression interne du réservoir de pressurisation (1; 51), la trémie d'alimentation (8; 58) par l'intermédiaire d'une conduite de transfert de particules (6) reliant entre eux le réservoir de pressurisation (1; 51) et la trémie de pressurisation (8; 58), ou par un dispositif d'alimentation en pression (12) monté séparément de la conduite de transfert de particules (6).

5. Procédé selon la revendication 2, caractérisé en ce qu'on met la pression interne de la trémie de pressurisation (8; 58) au même niveau que la pression interne du réservoir de pressurisation (1; 51) ou à une pression de 0,0098 à 0,981 bar plus élevée que la pression interne du réservoir de pressurisation (1; 51).

6. Procédé selon la revendication 1, caractérisé en ce qu'après l'achèvement du remplissage du moule (26; 76) avec les particules pré-moussées, on recycle dans la trémie de pressurisation (8; 58) toute portion restante des particules pré-moussées (2; 52) et on les y maintient ensuite sous pression.

7. Procédé pour la fabrication d'objets moulés par expansion (40) en une résine thermoplastique, ledit procédé consistant

à transférer une portion convenable de particules pré-moussées (2; 52) de la résine thermoplastique dans une trémie de maintien sous pression ou pressurisation (8; 58) et à maintenir les particules pré-moussées (2; 52), ainsi transférées, sous pression dans la trémie de pressurisation (8; 58);

à remplir sous pression avec une quantité prédéterminée des particules pré-moussées (2; 52) en provenance de la trémie de pressurisation, un moule (26; 76); et

à soumettre les particules pré-moussées (2; 52), remplissant ainsi le moule (26; 76), à un chauffage à l'intérieur de celui-ci de manière à provoquer le moussage et l'expansion des particules pré-moussées (2; 52), et, de ce fait, lier par fusion les particules expansées résultantes avec obtention de l'objet moulé par expansion (40) en la résine thermoplastique;

caractérisé en ce que lesdites particules pré-moussées (2; 52) sont toujours préalablement maintenues sous pression dans un réservoir de pressurisation (1; 51) et que le remplissage du moule (26; 76) avec lesdites particules pré-moussées (2; 52) est effectué sans diminution sensible de volume des particules (2; 52) résultant ainsi du remplissage, tandis que l'on maintient une fente (31; 81) dans le moule (26; 76).

8. Procédé selon la revendication 7, caractérisé en ce que la fente (31; 81) est formée par aménagement d'un interstice d'une largeur de 0,8—10,00 mm entre les parties mutuellement en contact du noyau (28; 78) et de la cavité (29; 79) du moule (26; 76).

9. Procédé selon la revendication 7, caractérisé en ce que la pression de remplissage lors du remplissage du moule (26; 76) avec les particules pré-moussées (2; 52) est située dans l'intervalle de 0,49 à 9,81 bars (manométriques).

10. Appareil convenant pour être utilisé dans la fabrication d'un objet moulé par expansion (40) en une résine thermoplastique, qui comprend:

au moins une trémie de maintien sous pression ou pressurisation (8; 58) comportant un orifice d'entrée de particules (9) et un orifice de sortie de particules (10) et apte à retenir une portion convenable des particules (2; 52), ladite portion convenable y ayant été transférée, et ensuite à réaliser l'alimentation en une quantité de particules (2; 52), ladite quantité étant désirée pour le moulage de l'objet moulé par expansion (40);

un mécanisme à vanne (25; 75) pour fermer avec possibilité de réouverture, l'orifice de sortie de particules (10) de la trémie de pressurisation (8; 58);

au moins une machine de moulage (23) équipée d'un compartiment de moulage (30; 80), dans lequel est destiné à être effectué le remplissage avec les particules (2; 52), et d'un moyen de chauffage pour chauffer les particules (2; 52) résultant ainsi du remplissage, afin de provoquer l'expansion des particules (2; 52) résultant ainsi du remplissage; et

un système de remplissage (22; 27; 77) avec des particules pour produire l'écoulement des particules (2; 52) à partir de la trémie de pressurisation (8; 58) à travers l'orifice de sortie de particules (10) de celle-ci, puis le remplissage du compartiment de moulage (30; 80) avec les particules (2; 52) à travers une ouverture de remplissage avec des particules (32; 82), tout en maintenant les particules (2; 52) à l'état sous pression ou pressurisé; caractérisé par

un réservoir de pressurisation (1; 51) ayant un volume intérieur suffisant pour conserver à l'intérieur de celui-ci des particules pré-moussées (2; 52) en la matière plastique, et comportant un orifice de sortie de particules (3);

un système d'alimentation en pression (4; 54) pour mettre en pression l'intérieur du réservoir de pressurisation (1; 51), de manière à appliquer une pression interne prédéterminée sur les particules (2; 52); et

un dispositif de transfert de particules (6) pour produire, tout en maintenant la portion convenable des particules (2; 52) à l'état pressurisé, l'écoulement de la portion convenable des particules (2; 52) à partir du réservoir de pressurisation (1; 51), à travers l'orifice de sortie de particules (3), puis sa pénétration dans la

15

EP 0 153 706 B1

trémie de pressurisation (8; 58) à travers l'orifice d'entrée de particules (9) de celle-ci.

11. Appareil selon la revendication 10, caractérisé en ce que l'orifice de sortie de particules (3) du réservoir de pressurisation (1; 51) et l'orifice d'entrée de particules (9) de la trémie de pressurisation (8; 58) sont reliés par une conduite de transfert de particules (6) et qu'une ouverture d'alimentation en particules (24) de la machine de moulage (23), ladite ouverture d'alimentation en particules (24) étant en communication avec l'ouverture de remplissage avec des particules (32; 82), sont reliées par une conduite d'alimentation en particules (22), de telle manière que le transfert des particules pré-moussées (2; 52) et le remplissage du compartiment de moulage (30; 80) avec celles-ci soient effectués respectivement par l'intermédiaire de la conduite de transfert de particules (6) et par l'intermédiaire de la conduite d'alimentation en particules (22).

12. Appareil selon la revendication 11, caractérisé en ce que la trémie de pressurisation (8) est pourvue de plusieurs orifices de sortie de particules (10) auxquels sont reliées une ou plusieurs machines (23), chacune du même type que ladite machine de moulage au moins unique (23).

13. Appareil selon la revendication 11, caractérisé en ce que l'appareil comprend plusieurs trémies de pressurisation (8) à chaque desquelles est reliée une machine de moulage (23) du même type que ladite machine de moulage au moins unique (23).

14. Appareil selon la revendication 10, caractérisé en ce qu'un tube perforé (13) à maille d'au moins 40 est monté à l'intérieur de la trémie de pressurisation (8), une extrémité du tube perforé (13) étant reliée à un conduit d'alimentation en pression (12) pour mettre en pression l'intérieur de la trémie de pressurisation (8), et que l'autre extrémité du tube perforé (13) est reliée à un conduit d'échappement (15) pour diminuer la pression intérieure de la trémie de pressurisation (8).

15. Appareil selon la revendication 10, caractérisé en ce que la trémie de pressurisation (8) est montée à rotation de manière à ce que lors du recyclage de toute portion restante des particules pré-moussées (2) dans la trémie de pressurisation (8) après l'achèvement du remplissage du compartiment de moulage (30) avec lesdites particules, on puisse déplacer l'orifice de sortie de particules (10) de la trémie de pressurisation (8) dans une position dans laquelle la charge des particules pré-moussées (2) de la trémie de pressurisation (8) sur l'orifice de sortie de particuels (10) de la trémie de pressurisation (8) est diminuée pour faciliter le retour de la portion restante des particules pré-moussées (2).

16. Appareil selon la revendication 10, caractérisé en ce que la trémie de pressurisation (58) se compose d'une partie fixe (91) et d'une partie mobile (92), la dernière partie (92) étant déplaçable en montée et en descente par rapport à la partie précédente (91) de manière à rendre le volume intérieur de la trémie de pressurisation (58) variable, et en ce qu'elle est munie d'une graduation (93) poour l'indication du volume des particles (52) retenues à l'intérieur de celle-ci.

17. Appareil selon la revendication 16, caractérisé en ce qu'un mécanmisme à vanne (7; 57) est prévu pour fermer, avec possibilité de réouverture, l'orifice de sortie de particules (3) du réservoir de pressurisation (1, 51).

18. Appareil selon la revendication 17, caractérisé en ce que des filtres d'échappement en forme de tamis (95, 96) sont respectivement montés éntre le mécanisme à vanne (57) pour le réservoir de pressurisation (51) et l'orifice d'entrée de particules de la trémie de pressurisation (58) et entre l'orifice de sortie de particules de la trémie de pressurisation (58) et le mécanisme à vanne (75) pour la trémie de pressurisation (58).

# FIG.1

# FIG.2

# FIG.3

# FIG.4

# FIG.5

FIG.6

FIG.7

# FIG.8

# FIG.9

FIG.10

FIG.11

6

FIG.12

FIG.13

# FIG.14

# FIG.15